# EUROPÄISCHE PATENTSCHRIFT

(11) **EP 2 418 034 B1**
(45) Veröffentlichungstag und Bekanntmachung des Hinweises auf die Patenterteilung: **30.09.2015**
(21) Anmeldenummer: 11177278.6
(22) Anmeldetag: 11.08.2011
(51) Int. Cl.: B22F 5/08, B22F 7/08, B22F 7/02, C22C 21/02, C22C 21/10, C22C 21/14, C22C 21/16, F16H 55/06, B23P 15/14

(54) **Zahnrad-Sinterverbund und Verfahren zu seiner Herstellung**
Sintered gear wheel composite and method for its production
Composite de pignon fritté et son procédé de fabrication

(30) Priorität: 11.08.2010 DE 102010034014
(43) Veröffentlichungstag der Anmeldung: 15.02.2012
(73) Patentinhaber: Schwäbische Hüttenwerke Automotive GmbH, 73433 Aalen-Wasseralfingen (DE)
(72) Erfinder: Bölstler, Alfred, 73463 Westhausen (DE); Dr. Pohl, Angelika, 70197 Stuttgart (DE)
(74) Vertreter: Schwabe - Sandmair - Marx

(56) Entgegenhaltungen:
- EP-A1- 1 126 040
- WO-A1-2008/004362
- DE-A1- 19 752 380
- DE-A1-102005 041 282
- DE-A1-102008 028 640
- DE-B3- 10 331 631
- JP-A- H0 633 113
- US-A1- 2004 208 772
- US-A1- 2006 231 366
- US-A1- 2010 081 530
- US-B2- 7 748 118

## Beschreibung

Die Erfindung betrifft ein Verfahren zur Herstellung eines Rotationskörpers unter Einschluss pulvermetallurgischer Verfahren, einen Sinterverbund und die Verwendung des Sinterverbunds in einem Schwenkflügelversteller zum Verstellen der Drehwinkellage einer Ventilsteuerwelle relativ zu einer Kurbelwelle einer Verbrennungskraftmaschine. Das Verfahren eignet sich insbesondere zur Herstellung des Sinterverbunds.

Pulvermetallurgisch können auch Bauteile mit komplexer Geometrie hergestellt werden, wenn die Bauteile aus separat gepressten Ausgangskörpern zusammengesetzt und die Ausgangskörper durch gemeinsames Sintern dauerhaft fest miteinander stoffschlüssig verbunden werden. So ist aus der EP 1 923 155 B1 ein Verfahren zum Herstellen zusammengesinterter Maschinenteile bekannt, bei dem ein zylindrisches inneres Element und ein scheibenförmiges äußeres Element jeweils aus einem Pulver einer Legierung auf Eisenbasis einzeln gepresst und zu einem festen Verbund miteinander versintert werden. Das zylindrische innere Element wird mit Stützen geformt, die axial in Ausnehmungen des scheibenförmigen äußeren Elements hineinragen. Die Stützen werden bei dem Pressen mit einem radialen Übermaß geformt, so dass sie mit Presspassung in die jeweilige Ausnehmung ragen und dadurch an ihren Umfangsflächen durchgehend fest mit dem scheibenförmigen äußeren Element beim gemeinsamen Sintern verbunden werden. Vergleichbare Lehren enthalten die DE 197 52 380 A1 und die DE 10 2008 028 640 A1, die ebenfalls das Zusammensintern von aus einem Pulver einer Eisenbasislegierung separat geformten Presslingen beschreiben. Auch nach diesem Stand der Technik ist das Zusammensetzen der Presslinge unter radialer Presspassung Voraussetzung für die Schaffung des Sinterverbunds. Das Pressen der Ausgangskörper bzw. Ausgangskörper auf Presspassung setzt ein genaues, eng toleriertes Formen der Ausgangskörper voraus. Auch das Positionieren der miteinander zu sinternden Presslinge in der jeweiligen Presspassung ist mit Aufwand verbunden und kostet Zeit.

Die Die WO 2008/004362 betrifft einen Rotationskörper, mit einem Gehäuse mit einer Abdeckung. Gehäuse und Abdeckung sind aus Aluminiumguss geformt und anschließend an Stirnseiten zusammengesintert. Die US 7,748,118 B2 betrifft ein Hohlrad aus einem ersten Aluminiumpulver mit einem Einsatz mit einer Innenverzahnung, der aus einem zweiten vom ersten unterschiedlichen Aluminiumpulver durch Pressung geformt ist. Der Einsatz wird in das Hohlrad vollständig eingesteckt, sodass die gesamte Außenseite des Einsatzes an der Innenseite des Hohlrades anliegt. Das Hohlrad und der Einsatz werden in dieser Position durch Sintern miteinander verbunden. Die EP 1 126 040 A1 betrifft ein Bauteil, das mit einem Reibpartner über eine Gleitfläche zusammenwirkt. Das Bauteil wird aus einer Aluminium-Silizium-Kupfer-Magnesium-Legierung durch Sintern hergestellt.

Es ist eine Aufgabe der Erfindung, die Herstellung eines Sinterverbunds aus separat geformten Ausgangskörpern zu vereinfachen und dadurch einen Beitrag zur Senkung der Herstellkosten zu leisten.

Die Erfindung geht von dem Verfahren gemäß Anspruch 1 zur pulvermetallurgischen Herstellung eines Rotationskörpers aus, bei dem wenigstens zwei Ausgangskörper, im folgenden erster Ausgangskörper und zweiter Ausgangskörper, jeweils aus Metallpulver separat voneinander gepresst, mit Stirnflächen in Bezug auf eine Längsachse des Rotationskörpers in axialem Kontakt aneinandergelegt und durch gemeinsames Sintern dauerhaft fest miteinander versintert werden. In Abwandlungen des Verfahrens kann auch nur einer der Ausgangskörper, beispielsweise der erste Ausgangskörper, aus dem Metallpulver gepresst werden, während der andere Ausgangskörper auf andere Weise geformt wird. Die Formung des anderen Ausgangskörpers schließt ein Gießen dieses Ausgangskörpers aus einer Metallbasisschmelze ein. Der andere Ausgangskörper kann unmittelbar als Gussstück, also durch das Gießen endkonturnah geformt werden, er kann nach dem Gießen aber auch durch eine thermische oder mechanische Behandlung, insbesondere eine Umformung, und gegebenenfalls eine mechanische Bearbeitung wie etwa eine spanende Bearbeitung geformt werden. So kann er insbesondere aus einem Halbzeug, beispielsweise aus einem blech- oder plattenförmigen Halbzeug, mittels eines Trennverfahrens erhalten werden.

Nach der Erfindung werden die Ausgangskörper allerdings nicht aus einem Metallpulver gepresst bzw. gegossen, dessen Basis Eisen ist, sondern aus einem Metallpulver oder einer Metallschmelze auf Aluminiumbasis. Nach dem vorstehenden bedeutet dies, dass wenigstens einer der Ausgangskörper aus dem Metallpulver auf Aluminium gepresst und der andere Ausgangskörper entweder ebenfalls aus einem Metallpulver auf Aluminiumbasis gepresst oder unter Einschluss eines Gießverfahrens hergestellt wird. Die Zusammensetzung des jeweiligen Aluminiumwerkstoffs ist bei beiden Ausgangskörpern vorzugsweise die gleiche, zumindest sind die Aluminiumwerkstoffe, sollten sie ungleich sein, soweit aneinander angepasst, dass bei dem gemeinsamen Sintern im Fügebereich der Ausgangskörper eine ausreichend feste Sinterverbindung entsteht. Das Pulver kann insbesondere ein Pulver einer einzigen Aluminiumbasislegierung sein, es kann sich auch um eine Pulvermischung unterschiedlicher Aluminiumbasislegierungen oder ein anders gemischtes Pulver handeln, dessen Basis aber jedenfalls Aluminium ist. Werkstoffbedingt sintern die Ausgangskörper bei dem gemeinsamen Sintern an den im axialen Kontakt positionierten Stirnflächen zusammen, versintern in diesem Sinne. Die Ausgangskörper, soweit pulvermetallurgisch durch Pressen geformt, werden bei dem gemeinsamen Sintern als solche gesintert und an ihren einander kontaktierenden Stirnflächen zusammengesintert, so dass ein einziger, über die Stirnflächen hinweg gesinterter Körper, ein Sinterverbund, erhalten wird.

Der Sinterverbund weist über seine gesamte Länge ein dem Sintern entsprechend homogenes Mikrogefüge auf, ein Sintergefüge, auch im Fügebereich über die miteinander versinterten Stirnflächen hinweg, obgleich der zusammengesinterte Fügebereich unter dem Mikroskop noch identifiziert werden kann. So kann der Verbundkörper überall, auch axial über den Fügebereich hinweg, das gleiche Mikrogefüge aufweist. Im Fügebereich können aber auch lokal Stellen vorhanden sein, in denen die Ausgangskörper nicht vollständig miteinander versintert sind. Die Verbindung ist vorteilhafterweise aber wenigstens so fest wie die im Stand der Technik üblichen, nur form- oder kraftschlüssigen Verbindungen. Falls einer der Ausgangskörper unter Einschluss eines Gießverfahrens hergestellt wurde, gelten die vorstehenden Ausführungen hinsichtlich eines solchen Sinterverbunds nur für den pulvermetallurgisch geformten Ausgangskörper und den Fügebereich. Über den Fügebereich hinweg geht das Sintergefüge des einen Ausgangskörpers in das Gussgefüge des anderen Ausgangskörpers über. Die im Bereich der Stirnflächen erzeugte Sinterverbindung reicht aus, um die für den Gebrauch des Rotationskörpers ausreichend feste stoffschlüssige Verbindung der getrennt geformten Bestandteile des Sinterverbunds bzw. Rotationskörpers zu gewährleisten. Auf ein Fügen unter radialer Presspassung kann verzichtet werden. Entsprechend vereinfachen sich das Pressformen oder anderweitige Formen und das Positionieren der miteinander zu sinternden Ausgangskörper. Ferner kann das Gewicht gegenüber beispielsweise einem Rotationskörper aus Stahl verringert werden. Mit der Gewichtsreduzierung geht eine Verringerung des Trägheitsmoments einher. In der Folge sind höhere Wirkungsgrade erreichbar. Von Vorteil sind ferner die Korrosionsbeständigkeit und gute Wärmleitfähigkeit von Aluminiumwerkstoffen.

Das Pulver auf Aluminiumbasis ist seiner Zusammensetzung nach vorzugsweise ein Sinterwerkstoff, eine Aluminium-Sinterlegierung. Handelt es sich bei dem Pulver um eine Mischung unterschiedlicher Aluminiumbasislegierungen oder ein anders gemischtes Pulver, so ist die Mischung ihrer chemischen Zusammensetzung nach vorzugsweise eine Aluminium-Sinterlegierung. Der Sinterwerkstoff enthält in bevorzugten Ausführungen Silizium, Kupfer, Magnesium oder Zink, entweder nur ein einziges dieser Elemente oder vorzugsweise eine Kombination von zwei, drei oder aller vier Elemente. So kann der Sinterwerkstoff beispielsweise eine Al-Si-Cu-Mg-Legierung sein oder als Pulvermischung ein aus solch einer Legierung bestehendes Pulver umfassen. Anstelle oder gemeinsam mit Silizium kann die Legierung auch Zink enthalten. Auch Zinn kann enthalten sein. Bevorzugt werden Aluminiumlegierungen bestehend aus folgenden massenbezogenen Legierungsanteilen: Silizium = 0.5 - 16 %, Kupfer = 0.5 - 5%, Zink = 0 - 7,0 %, Magnesium = 0 - 6 %, noch bevorzugter: Silizium = 10 - 15 %, Kupfer = 1 - 3 %, Magnesium = 0 - 1 %, Zinn 0 - 0,5 %. Auch bei diesen Angaben gilt, dass nur einer oder jede aus den Bereichen bildbare Kombination dieser Legierungspartner im Aluminiumwerkstoff enthalten sein kann. Eine vorteilhafte Aluminium-Silizium-Kupfer-Magnesium-Legierung kann insbesondere einen Siliziumanteil von 14 %, einen Kupferanteil von 3 % und einen Magnesiumanteil von 0.6 % oder einen Siliziumanteil von 14 %, einen Kupferanteil von 2.5 % und einen Magnesiumanteil von 0.5 % aufweisen, bezogen jeweils auf das Gesamtgewicht der jeweiligen Legierung. Den Rest der jeweiligen Aluminiumlegierung macht abgesehen von unvermeidbarer Verunreinigung das Element Aluminium aus. Falls einer der Ausgangskörper nicht pulvermetallurgisch, sondern gießtechnisch mit bevorzugt nachfolgender Behandlung geformt wird, gelten die vorstehenden Ausführungen zumindest in Bezug auf bevorzugte Legierungspartner des Aluminiums ebenfalls. So kann der aus solch einem Aluminiumwerkstoff gefertigte Ausgangskörper insbesondere Silizium oder Zink zur Erhöhung der Sinteraktivität enthalten.

Da die Erfindung eines Zusammensinterns der Ausgangskörper an quer zur Längsachse des Rotationskörpers weisenden Flächen nicht bedarf, können die Ausgangskörper so geformt sein, dass sie im axialen Kontakt ihrer Fügeflächen, nämlich den Stirnflächen, quer zur Längsachse relativ zueinander nur gegen eine an den Stirnflächen wirkende Reibkraft beweglich sind, grundsätzlich sogar in jede quer zur Längsachse weisende Richtung. Die Stirnflächen können einfach plan sein. Sie können aber auch aneinander angepasst bzw. angeschmiegt gewölbt sein. Die Ausgangskörper können im für das gemeinsame Sintern positionierten Zustand zwar Kontakt miteinander auch an quer zur Längsachse weisenden Flächen haben, für die Ausführung des erfindungsgemäßen Verfahrens, insbesondere für die Festigkeit der Verbindung, bedarf es solch eines Kontakts wie gesagt jedoch nicht. Insbesondere ist in Bezug auf eine quer zur Längsachse weisende Richtung keine Presspassung erforderlich, obgleich eine solche nicht ausgeschlossen werden soll. In bevorzugten Ausführungen kontaktieren die Ausgangskörper einander im relativ zueinander positionierten Zustand nur mit planen Stirnflächen, an denen sie durch das gemeinsame Sintern miteinander versintert werden.

Um das Positionieren zu erleichtern, können innerhalb der Stirnflächen Positionierelemente geformt sein, also wenigstens ein Positionierelement pro Ausgangskörper, bevorzugt wenigstens zwei Positionierelemente pro Ausgangskörper. Das oder die Positionierelement(e) des ersten Ausgangskörpers und das oder die Positionierelement(e) des zweiten Ausgangskörpers können beim Positionieren als Zentrierelemente zusammenwirken, um die Ausgangskörper quer zur Längsachse relativ zueinander zu fixieren. Derartige Positionierelemente können unmittelbar ineinander greifen, indem die Positionierelemente wie Buchse und Stecker zusammenwirken. In einer Modifikation kann der erste Ausgangskörper und auch der zweite Ausgangskörper jeweils wenigstens eine Vertiefung aufweisen und ein zusätzliches Positionierelement als Stecker wirkend in beide Vertiefungen eingreifen. In noch einer Variante können Positionierelemente der Ausgangskörper mit einem oder mehreren Positionierelementen einer Positioniereinrichtung zusammenwirken. So kann der erste Ausgangskörper und der zweite Ausgangskörper beispielsweise jeweils wenigstens eine Bohrung aufweisen, die im positionierten Zustand axial fluchten. Eine Positioniereinrichtung kann entsprechend einen passenden Positionierstift oder -bolzen aufweisen, der im positionierten Zustand die Bohrung des einen Ausgangskörpers durchragt und in die zugeordnete Bohrung des anderen Ausgangskörpers hineinragt oder auch diese durchragt. Solch ein externes Positionierelement einer Positioniereinrichtung nimmt an der Sinterreaktion vorzugsweise nicht teil. Es kann aber auch aus einem Werkstoff bestehen, der sich bei dem Sinterprozess auflöst.

Gemäß der Erfindung liegen die Ausgangskörper bei dem gemeinsamen Sintern lose aufeinander, so dass im axialen Kontakt der Stirnflächen nur das Gewicht des aufliegenden Ausgangskörpers wirkt. Ein Klemmwerkzeug ist nicht erforderlich, obgleich die Verwendung solch eines Werkzeugs nicht ausgeschlossen werden soll. In bevorzugten Ausführungen findet das gemeinsame Sintern aber im losen Druckkontakt der Ausgangskörper statt, wobei die axiale Druckkraft nur durch das Eigengewicht des oben liegenden Ausgangskörpers erzeugt wird. Bei Verwendung von Pulvern auf Eisenbasis würde unter diesen Umständen ein Zusammensintern nicht stattfinden, jedenfalls nicht mit der für eine drehmomentübertragende Verbindung der Ausgangskörper erforderlichen Festigkeit. Verantwortlich ist eine vergleichsweise höhere Sinteraktivität des Aluminiumwerkstoffs, die durch Zugabe von Silizium oder Zink erhöht werden kann. Das Wort "oder" wird hier wie auch sonst von der Erfindung stets im Sinne eines "inklusiv oder" verstanden, umfasst also die Bedeutung von "entweder...oder " und die auch die Bedeutung von "und", soweit sich aus dem jeweils konkreten Zusammenhang nicht ausschließlich eine dieser beiden Bedeutungen nur ergeben kann. Bezogen auf die Zugabe von Silizium oder Zink bedeutet dies, dass der Aluminiumwerkstoff in einer ersten Variante von diesen beiden Elementen nur Silizium, in einer zweiten Variante nur Zink und in einer dritten Variante sowohl Silizium als auch Zink enthalten kann.

Die Erfindung eignet sich insbesondere auch zum Zusammensintern von pressgeformten Ausgangskörpern, die aufgrund von Formunterschieden beim gemeinsamen Sintern Formänderungen erfahren, deren Ausmaß sich in nennenswertem Umfang unterscheidet. Unterschiede in der Formänderung der miteinander zu verbindenden Ausgangskörper sind zu erwarten, wenn die Massenverteilung des ersten Ausgangskörpers sich von der Massenverteilung des zweiten Ausgangskörpers quer zur Längsachse in nennenswertem Ausmaß unterscheidet. Dies ist beispielsweise dann der Fall, wenn der erste Ausgangskörper als Hülsenstruktur mit einer in Umfangsrichtung zumindest abschnittsweise im Vergleich zu ihrem Außenradius dünnen Hülsenwand und der zweite Ausgangskörper als scheibenförmige Struktur gepresst wird. So kann der zweite Ausgangskörper insbesondere als Ringscheibe geformt sein mit einer radial gemessenen Ringbreite, die größer als die Dicke der Hülsenwand des ersten Ausgangskörpers ist. Unter solchen Umständen erfährt der erste Ausgangskörper beim Sintern eine größere relative Formänderung in radialer Richtung als der zweite Ausgangskörper. Der Unterschied hinsichtlich der Formänderung wird noch verstärkt, wenn die Hülsenstruktur eine größere axiale Länge als die Scheibenstruktur hat. Bei hohlen Grünkörpern wie etwa Hülsen- und Ringstrukturen ist die relative Formänderung, also der Unterschied zwischen dem nur gepressten und dem fertig gesinterten Zustand, auch als Schwindung bekannt, umso größer je kleiner das Verhältnis von Außenvolumen zu Innenvolumen der jeweiligen Hohlstruktur ist. Über dieses eher globale Maß des Volumenverhältnisses hinaus kommt es wie bereits erwähnt auf die Massenverteilung in radialer Richtung und auch auf die Massenverteilung in Umfangsrichtung an, wobei sich die Richtungsangaben auf die Längsachse beziehen. Je kleiner also das Verhältnis von Außen- zu Innenvolumen und je größer, insbesondere abrupter, sich die Massenverteilung in radialer Richtung oder Umfangsrichtung ändert, desto größer ist die relative Formänderung beim Sintern.

Ein aus Ausgangskörpern der erläuterten Art hergestellter Sinterverbund ist auch als solcher ein Gegenstand der Erfindung. Solch ein Sinterverbund kann insbesondere einen durch das gemeinsame Sintern aus dem zweiten Ausgangskörper erhaltenen, scheibenförmig axial flachen Axialabschnitt und einen axial an diesen Abschnitt ansetzenden, durch das gemeinsame Sintern aus dem ersten Ausgangskörper erhaltenen weiteren Axialabschnitt aufweisen, der axial länger und über seinen Umfang zumindest abschnittsweise radial dünner als der scheibenförmige Axialabschnitt ist. Die axiale Aufteilung ist vorzugsweise so, dass der erste Ausgangskörper nur besagte Hülsenstruktur und der zweite Ausgangskörper nur die Scheibenstruktur bildet. Wird einer der Ausgangskörper nicht durch Pressformen, sondern gießtechnisch mit optional nachfolgender Behandlung oder Bearbeitung erhalten, so handelt es sich vorzugsweise um den zweiten Ausgangskörper, der den scheibenförmig flachen Axialabschnitt bildet. Dieser Ausgangskörper kann vorteilhafterweise aus einem Aluminiumblech oder gegebenenfalls dickeren platten- oder scheibenförmigen Aluminiumhalbzeug erhalten werden. Grundsätzlich kann stattdessen aber auch der andere Ausgangskörper aus solch einem Halbzeug erhalten werden oder unmittelbar als Gussstück vorliegen.

In bevorzugten Ausführungen weisen die aus den Ausgangskörpern jeweils erhaltenen Axialabschnitte des Sinterverbunds über ihre axiale Länge jeweils zumindest im Wesentlichen einen konstanten Querschnitt auf, weisen also über ihre jeweilige axiale Länge gesehen keine für das Pressformen oder Sintern wesentliche Querschnittsvariation auf. Solch eine zylindrische Form vereinfacht das Pressformen des jeweiligen Ausgangskörpers, der axial, in Pressrichtung ohne Durchmessersprünge geformt werden kann. Durch axial nicht variierende Querschnitte können auch die beim gemeinsamen Sintern auftretenden Formänderungen pulvermetallurgisch geformter Ausgangskörper leichter beherrscht werden. Von der Querschnittskonstanz sind allerdings Positionierelemente, beispielsweise Nasen und zum Positionieren damit zusammenwirkende Vertiefungen, ausgenommen, falls überhaupt einer der Ausgangskörper mit einem abragenden oder einragenden Positionierelement geformt wird.

Um durch das Sintern hervorgerufene Formänderungen zu reduzieren, können aus Pulver gepresste Ausgangskörper unterhalb einer für das eigentliche Sintern erforderlichen Sintertemperatur vorgesintert werden. Die Sintertemperatur von Sinteraluminiumwerkstoffen liegt im Bereich zwischen 500 und 650 °C und wird dem konkret gewählten Sinterwerkstoff angepasst eingestellt. Das optionale Vorsintern findet bei entsprechend niedrigerer Temperatur, zweckmäßigerweise bei einer in Abhängigkeit vom Sinterwerkstoff angepasst aus dem Bereich von 300 bis 500 °C gewählten Vorsintertemperatur statt. Durch Vorsintern können die Ausgangskörper entwachst werden. Das Vorsintern kann auch nur zum Zwecke des Entwachsens durchgeführt werden. Mit dem Vorsintern geht eine gewisse Verdichtung einher, da die Pulverpartikel bereits in einem gewissen Ausmaß miteinander verbacken.

Der erste oder zweite Ausgangskörper kann oder können nach Entnahme bzw. Auswurf aus der Pulverpresse mechanisch bearbeitet und anschließend für das gemeinsame Sintern positioniert werden. Zwischen der mechanischen Bearbeitung und dem gemeinsamen Sintern können die Ausgangskörper oder vorzugsweise nur jeweils einer der Ausgangskörper des zu schaffenden Sinterverbunds wie vorstehend ausgeführt vorgesintert werden. In einer Verfahrensvariante findet eine mechanische Bearbeitung zusätzlich oder vorzugsweise erst nach dem optionalen Vorsintern am vorgesinterten Ausgangskörper statt. Der erste oder zweite Ausgangskörper kann oder können nach einem Vorsintern vor oder gegebenenfalls nach einer optionalen mechanischen Bearbeitung einzeln kalibriert werden. Der einzelne Ausgangskörper oder der Sinterverbund kann einer oder mehreren mechanischen Bearbeitung(en) unterzogen werden, beispielsweise einer spanenden oder schleifenden Bearbeitung, um etwa ein oder mehrere Löcher zu bohren, eine besonders glatte Oberfläche oder ein oder mehrere Funktionselement(e) am einzelnen Ausgangskörper, vorzugsweise dem vorgesinterten Ausgangskörper, oder am Sinterverbund zu schaffen.

In bevorzugten Ausführungen, in denen der erste und der zweite Ausgangskörper aus Pulver gepresst werden und die relative Formänderung bei einem der Ausgangskörper aufgrund der Form größer als bei dem anderen ist, wird nur jeweils dieser Ausgangskörper vorgesintert, während der andere im gepressten Zustand ohne Vorsinterung dem gemeinsamen Sintern unterzogen wird. In den vorstehend diskutierten Fällen, in denen der erste Ausgangskörper beim Sintern unmittelbar aus dem gepressten Zustand die größere relative Formänderung erfahren würde, wird vorzugsweise jeweils nur der erste Ausgangskörper jedes Sinterverbunds vorgesintert.

Was den Sinterverbund als solchen anbetrifft, ist die Erfindung insbesondere auf einen Sinterverbund gerichtet, der ein Hohlrad mit wenigstens einem Flügel und eine an das Hohlrad axial angesetzte und mit dem Hohlrad drehsteif verbundene Antriebsscheibe aufweist. Der erste Ausgangskörper kann im Sinterverbund das Hohlrad und der zweite Ausgangskörper die Antriebsscheibe bilden. Das Hohlrad kann insbesondere als die vorstehend erläuterte Hülsenstruktur und die Antriebsscheibe insbesondere als die vorstehend erwähnte Scheibenstruktur geformt sein. Hohlrad und Antriebsscheibe werden separat voneinander vorzugsweise jeweils aus einem Metallpulver auf Aluminiumbasis, vorzugsweise der beschriebenen Art, gepresst und durch gemeinsames Sintern im erläuterten Sinne drehsteif miteinander verbunden, so dass im Gebrauch des Sinterverbunds in die Antriebsscheibe eingeleitete Drehmomente über die Sinterverbindung auf das Hohlrad übertragen werden. Das Hohlrad weist eine um die zum Rotationskörper genannte Längsachse erstreckte Wand und den wenigstens einen Flügel auf, der quer zur Längsachse, vorzugsweise nach innen, von der Wand vorragt. Zweckmäßigerweise ragen mehrere solcher Flügel von der Hohlradwand vor, wobei die mehreren Flügel vorzugsweise über den Umfang gesehen gleichmäßig um die Längsachse verteilt angeordnet sind.

Die Antriebsscheibe kann in einer den Sinterverbund umfassenden Maschine oder Maschinenkomponente als Riemenscheibe in einem Riementrieb, entweder als Reibriemenscheibe oder vorzugsweise als Zahnriemenscheibe, als Kettenrad eines Kettentriebs oder als Zahnrad eines Zahnradgetriebes, insbesondere eines Stirnradgetriebes, dienen. Die Antriebsscheibe weist in bevorzugten Ausführungen um die Längsachse umlaufend eine Verzahnung, vorzugsweise eine Außenverzahnung auf.

Ein Sinterverbund der erfindungsgemäßen Art kann als Stator zur Herstellung eines Schwenkflügelverstellers zum Verstellen der Drehwinkellage einer Ventilsteuerwelle, beispielsweise einer Nockenwelle, relativ zu einer Kurbelwelle einer Verbrennungskraftmaschine verwendet werden. Als Stator wird derjenige Teil des Schwenkflügelverstellers bezeichnet, der in fester Drehwinkelbeziehung zur Kurbelwelle angetrieben wird und über einen Rotor des Schwenkflügelverstellers auf die Ventilsteuerwelle abtreibt. Der Rotor ist relativ zum Stator um die Längsachse innerhalb eines begrenzten Schwenkwinkels hin und her drehbar und dadurch die Drehwinkellage der Ventilsteuerwelle relativ zur Kurbelwelle verstellbar. Der Stator kann mittels seiner Antriebsscheibe mit der Kurbelwelle mechanisch gekoppelt sein, insbesondere durch einen Kettentrieb oder Zahnriementrieb. Schwenkflügelversteller wie die Erfindung sie betrifft werden beispielsweise in der DE 10 2007 020 431 B und der DE 10 2009 024 482 beschrieben. Die Statoren der bekannten Schwenkflügelversteller sind aus mehreren getrennt geformten Teilen zusammengesetzt, die form- oder kraftschlüssig oder durch Schweißen stoffschlüssig miteinander verbunden sind. Die gefügten Teile derartiger Statoren werden einzeln zwar auch bereits pulvermetallurgisch hergestellt, bislang jedoch konventionell durch beispielsweise Pressverbinden, Schraubverbinden oder Schweißen gefügt. Eine Zusammenführung der Funktionen einer von extern, beispielsweise einer Kurbelwelle, antreibbaren Antriebsscheibe und eines in Bezug auf den Schwenkflügelversteller intern abtreibenden Flügelrads bzw. geflügelten Hohlrads bereits bei der pulvermetallurgischen Herstellung geht aus dem Stand der Technik jedoch nicht hervor.

Bevorzugte Merkmale der Erfindung werden auch in den Unteransprüchen und deren Kombinationen beschrieben.

Nachfolgend werden Ausführungsbeispiele der Erfindung anhand von Figuren erläutert. An den Ausführungsbeispielen offenbar werdende Merkmale bilden jeweils einzeln und in jeder Kombination die Gegenstände der Ansprüche und auch die vorstehend erläuterten Ausgestaltungen vorteilhaft weiter. Es zeigen:
- Figur 1: einen Sinterverbund eines ersten Ausführungsbeispiels in einer perspektivischen Sicht,
- Figur 2: den Sinterverbund des ersten Ausführungsbeispiels in einer anderen perspektivischen Sicht,
- Figur 3: einen Sinterverbund eines zweiten Ausführungsbeispiels in einer perspektivischen Sicht,
- Figur 4: den Sinterverbund des zweiten Ausführungsbeispiels in einer anderen perspektivischen Sicht,
- Figur 5: einen für den Sinterverbund des ersten Ausführungsbeispiels durch Pressen geformten ersten Ausgangskörper,
- Figur 6: einen für den Sinterverbund des ersten Ausführungsbeispiels durch Pressen geformten zweiten Ausgangskörper,
- Figur 7: einen ersten Gefügebereich eines erfindungsgemäßen Sinterverbunds,
- Figur 8: einen zweiten Gefügebereich des Sinterverbunds der Figur 7,
- Figur 9: einen Schwenkflügelversteller mit dem Sinterverbund des zweiten Ausführungsbeispiels und
- Figur 10: einen Schwenkflügelversteller mit dem Sinterverbund des ersten Ausführungsbeispiels.

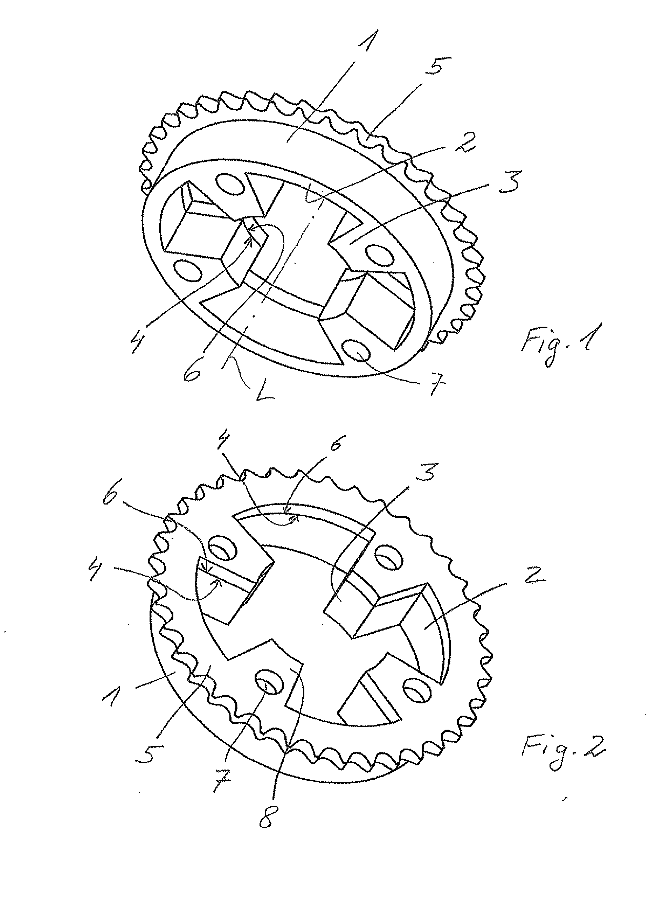

Figur 1 zeigt einen Rotationskörper eines ersten Ausführungsbeispiels in einer perspektivischen Sicht auf eine der beiden axialen Stirnseiten des Rotationskörpers, und Figur 2 zeigt den gleichen Rotationskörper in einer perspektivischen Sicht auf die gegenüberliegende Stirnseite. Der Rotationskörper ist ein pulvermetallurgisch hergestellter Verbundkörper, ein Sinterverbund. Er weist zwei separat voneinander geformte Axialabschnitte 1 und 5 auf, die mit einander zugewandten Stirnseiten 4 und 6 aneinander gesintert, also miteinander versintert sind. Die zusammengesinterten Stirnflächen 4 und 6 bilden einen internen Fügebereich des Rotationskörpers.

Der erste Axialabschnitt bildet ein Hohlrad 1 mit einer um eine zentrale Längsachse L umlaufenden Hohlradwand 2 und mehreren von der Hohlradwand 2 nach innen in Richtung auf die zentrale Längsachse L vorragenden Backen oder Flügeln 3. Die Flügel 3 sind in Umfangsrichtung in beispielsweise gleichen Winkelabständen um die Längsachse L verteilt angeordnet. Die Hohlradwand 2 weist zwischen in Umfangsrichtung benachbarten Flügeln 3 in radialer Richtung gemessen eine im Vergleich zu einem Außendurchmesser der Hohlraumwand 2 geringe Dicke auf, beispielhaft ist der Außendurchmesser der Hohlraumwand 2 vielfach größer als ihre Dicke.

Der zweite Axialabschnitt 5 ist eine Scheibenstruktur, in die für einen Rotationsantrieb des Rotationskörpers ein externes Drehmoment einleitbar ist und der deshalb im Folgenden auch als Antriebsscheibe 5 bezeichnet wird. Die Antriebsscheibe 5 ist beispielhaft ein Kettenrad. Das Flügel- oder Hohlrad 1 und die Antriebsscheibe 5 sind an den für den Sinterverbund 1, 5 internen Stirnflächen 4 und 6, der Stirnfläche 4 des Hohlrads 1 und der gegenüberliegend axial zugewandten Stirnfläche 6 der Antriebsscheibe 5, miteinander versintert und somit stoffschlüssig dauerhaft fest verbunden. Diese über die Stirnflächen 4 und 6 bestehende Sinterverbindung besteht über den gesamten Umfang des Sinterverbunds 1, 5 vorzugsweise gleichmäßig. Sie besteht vorteilhafterweise sowohl in den Umfangsabschnitten, in denen die Flügel 3 geformt sind als auch in den Zwischenabschnitten, in denen das Hohlrad 1 nur die vergleichsweise dünne Hohlradwand 2 aufweist. Das Hohlrad 1 und die Antriebsscheibe 5 sind sowohl über den gesamten Umfang als auch in radialer Richtung im axialen Kontakt überall gleichmäßig miteinander versintert, wodurch eine der Geometrie dieser Bauteile entsprechend größtmögliche Fügefläche erhalten wird. In Abwandlungen könnten innerhalb der aneinander liegenden Flächen auch Flächenbereiche gebildet sein, in denen das Hohlrad 1 und die Antriebsscheibe 5 nicht miteinander versintert sind. Für die Übertragung von Drehmoment ist jedoch eine innerhalb der durch die Geometrien vorgegebenen Grenzen möglichst großflächige Versinterung vorteilhaft.

Die Antriebsscheibe 5 ist über ihren inneren Umfang an den inneren Umfang des Hohlrads 1 angepasst geformt, Hohlrad 1 und Antriebsscheibe 5 weisen die gleiche Innenkontur auf. Die Antriebsscheibe 5 weist dementsprechend den Flügeln 3 im Querschnitt nachgeformte Abragungen 8 auf, die nach innen, in Richtung auf den zentralen Bereich, abragen und mit den Flügeln 3 überlappen. Nach außen ragt die Antriebsscheibe 5 über ihren gesamten Umfang über das Hohlrad 1 hinaus nach außen vor und weist im vorragenden Bereich umlaufend eine Außenverzahnung auf.

Die Antriebsscheibe 5 ist zumindest im Wesentlichen eine axial flache Scheibe mit zumindest im Wesentlichen über ihre gesamte axiale Erstreckung dem gleichen Querschnitt. Die Antriebsscheibe 5 ist eine Ringscheibe mit den an die Kontur der Flügel 3 angepassten Ringabschnitten und in Umfangsrichtung dazwischen frei bleibenden Kreisabschnitten. Das Hohlrad 1 weist eine im Vergleich zur Antriebsscheibe 5 größere axiale Erstreckung auf, es ist als eine axial kurze Hülsenstruktur geformt. Die Außenkontur bildet einen Kreis um die Längsachse L. Die Innenkontur setzt sich aus der Kontur der Flügel 3 und dazwischen liegenden Kreisabschnitten zusammen. Das Hohlrad 1 weist ebenfalls in Längsrichtung zumindest im Wesentlichen überall den gleichen Querschnitt auf. Die Flügel 3 und die sie überdeckenden Umfangsabschnitte der Antriebsscheibe 5 werden von axialen Bohrungen 7 durchsetzt, die der Montage des Rotationskörpers dienen.

Zur Herstellung des Sinterverbunds 1,5 werden das Hohlrad 1 und die Antriebsscheibe 5 jeweils separat aus einem Metallpulver in einer Pulverpresse gepresst. Bei dem Metallpulver handelt es sich um ein Sinteraluminium, beispielsweise um eine pulverisierte Sinteraluminiumlegierung oder eine Pulvermischung, die in ihrer Gesamtzusammensetzung einer Sinteraluminiumlegierung entspricht. Die durch das Pressformen endkonturnah erhaltenen, optional nach dem Pressen vorgesinterten Ausgangskörper oder Grünlinge, nämlich ein mit dem Hohlrad 1 korrespondierender erster Ausgangskörper 1 und ein mit der Antriebsscheibe 5 korrespondierender zweiter Ausgangskörper 5, werden mit ihren zu diesem Zeitpunkt noch freien Stirnflächen 4 und 6 wie aus den Figuren 1 und 2 für den Verbund 1,5 ersichtlich aneinander gelegt und bei einer geeignet gewählten Sintertemperatur Tₛ gemeinsam im aneinander liegenden Zustand gesintert, so dass sie über die im axialen Kontakt aneinander liegenden Stirnflächen 4 und 6 überall gleichmäßig miteinander versintern. Die Bohrungen 7 können in den so erhaltenen Sinterverbund 1, 5 eingearbeitet oder vorzugsweise bei den Ausgangskörpern 1 und 5 geformt, insbesondere bereits beim Pressen der Ausgangskörper 1 und 5 geformt werden.

Ein Formen der Bohrungen 7 bereits bei den Ausgangskörpern 1 und 5 hat den Vorteil, dass die Bohrungen 7 beim Aneinanderlegen für das gemeinsame Sintern der Positionierung und losen Fixierung der Ausgangskörper 1 und 5 dienen können, indem durch eine oder vorzugsweise mehrere der Bohrungen 7 ein oder jeweils ein als Positionierelement dienender Passstift oder -bolzen eingeführt wird. So kann beispielsweise eine für das Sintern dem Positionieren dienende Positioniereinrichtung derartige Positionierelemente aufweisen, und die miteinander zu versinternden Ausgangskörper 1 und 5 können auf das oder die Positionierelement(e) der Positioniereinrichtung mit ihren Bohrungen 7 aufgeschoben werden. Anstatt derartige Bohrungen 7 als Positionierelemente zu verwenden oder auch zusätzlich hierzu kann an den Stirnflächen 4 und 6 beim Pressen der Ausgangskörper 1 und 5 oder durch eine optionale mechanische Bearbeitung jeweils wenigstens ein Positionierelement geschaffen werden, nämlich wenigstens ein Positionierelement des Hohlrads 1 und wenigstens ein Positioniergegenelement der Antriebsscheibe 5. Eines der beim Fügen zusammenwirkenden Positionierelemente kann eine Vertiefung und das andere eine entsprechende Abragung sein. Das Positionierelement und dessen Positioniergegenelement können aber auch beide als Vertiefungen geformt und ein zusätzliches Positionierelement eingesetzt werden, das im positionierten Zustand in die einander axial gegenüberliegenden Vertiefungen eingreift. Solch ein zusätzliches Positionierelement ist vorzugsweise aus einem Werkstoff gebildet, der beim gemeinsamen Sintern mit dem Hohlrad-Ausgangskörper 1 und dem Antriebsscheiben-Ausgangskörper 5 versintert. Bevorzugt ist solch ein zusätzliches Positionierelement ebenfalls aus einem Werkstoff auf Aluminiumbasis gefertigt.

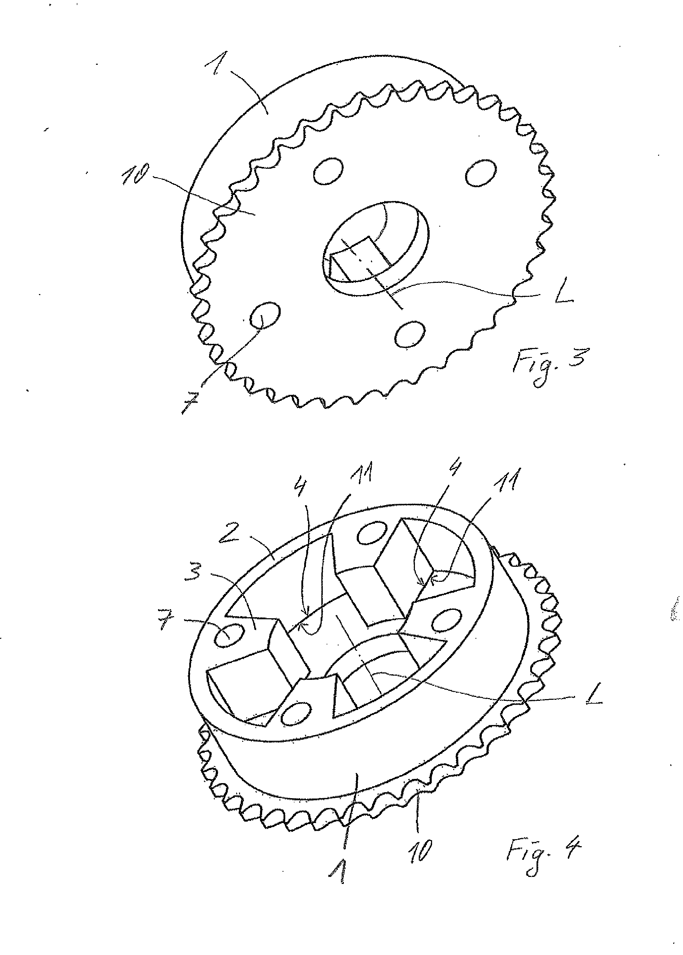

Die Figuren 3 und 4 zeigen einen Rotationskörper eines zweiten Ausführungsbeispiels, der ebenfalls als Sinterverbund aus einem Hohlrad 1 und einer Antriebsscheibe 10 gebildet ist. Das Hohlrad 1 entspricht dem des ersten Ausführungsbeispiels. Die Antriebsscheibe 10 entspricht in weiten Teilen der Antriebsscheibe 5 des ersten Ausführungsbeispiels, unterscheidet sich allerdings von dieser hinsichtlich ihres radial inneren Bereichs. Während die Antriebsscheibe 5 mit ihrer Innenkontur an die Innenkontur des Hohlrads 1 angepasst geformt ist, bildet die Antriebsscheibe 10 eine Art Deckel oder Boden des Rotationskörpers des zweiten Ausführungsbeispiels. Aufgrund dieses Formunterschieds weist der Rotationskörper des zweiten Ausführungsbeispiels im Wesentlichen die Form eines Topfs auf mit einem von der Antriebsscheibe 10 gebildeten Topfboden und einer vom Hohlrad 1 gebildeten, vom Topfboden axial abragenden Topfwand. Die Antriebsscheibe 10 erstreckt sich nach radial innen, in Richtung auf die zentrale Längsachse L, über ihren gesamten Umfang gesehen über die Hohlraumwand 2, beispielhaft auch über die Flügel 3 hinaus vor. Im Zentrum der Antriebsscheibe 10 verbleibt eine zentrale runde Durchgangsbohrung, d. h. die Innenkontur ist beispielhaft kreisrund. Von den zur Form der Antriebsscheibe 10 erwähnten und aus den Figuren ersichtlichen Unterschieden abgesehen entspricht der Rotationskörper des zweiten Ausführungsbeispiels dem des ersten Ausführungsbeispiels in allen Belangen, insbesondere hinsichtlich des Sinterwerkstoffs und der Sinterverbindung an den beim gemeinsamen Sintern einander axial kontaktierenden Stirnflächen 4 und 11, wobei die Stirnfläche 11 sich von der Stirnfläche 6 des ersten Ausführungsbeispiels nur nach radial einwärts außerhalb des Sinterbereichs unterscheidet. Die eigentlichen Fügeflächen sind die gleichen wie im ersten Ausführungsbeispiel.

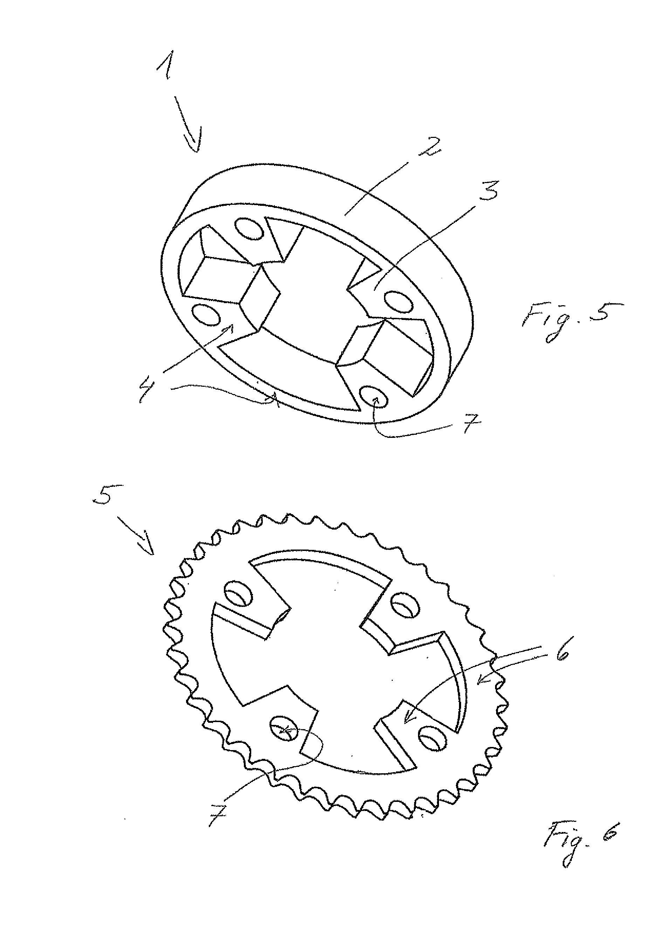

Die Figuren 5 und 6 zeigen die Ausgangskörper 1 und 5 nach dem Pressformen einzeln, also vor dem Fügen. Die Ausgangskörper 1 und 5 werden jeweils in solch einer Form gepresst, dass sie nach dem gemeinsamen Sintern und dem damit einhergehenden Schrumpfen der Endkontur des zu schaffenden Sinterverbunds 1, 5 entsprechen. Die Ausgangskörper 1 und 5 werden vorzugsweise aus dem gleichen Sinterwerkstoff, einem Sinteraluminiumpulver, in die aus den Figuren 5 und 6 ersichtliche Form gepresst. Nach dem Entformen und der Entnahme aus dem jeweiligen Presswerkzeug können sie mechanisch nachbearbeitet werden, beispielsweise um eine beim Pressen entstandene Presshaut zu entfernen.

Die Ausgangskörper 1 und 5 werden zum gemeinsamen Sintern relativ zueinander positioniert, so dass sie mit den Stirnflächen 4 und 6, ihren Fügeflächen, axial aneinander liegen. Die Stirnflächen 4 und 6 sind plane, radial zur Längsachse L des jeweiligen Ausgangskörpers 1 und 5 weisende Fügeflächen. Diese Fügeflächen 4 und 6 werden lediglich durch die Durchgangsbohrungen 7 durchbrochen. Im aneinander liegenden Zustand kann einer der Ausgangskörper 1 und 5 insbesondere unter Schwerkraft, also seinem eigenen Gewicht, auf dem anderen der Ausgangskörper 1 und 5 aufliegen.

Die Ausgangskörper 1 und 5 werden mit ihren Stirnflächen 4 und 6 aneinander liegend in einem Sinterofen bei Sintertemperatur Tₛ gemeinsam gesintert. Die Sintertemperatur Tₛ wird an den Sinterwerkstoff angepasst gewählt und liegt bei dem erfindungsgemäß verwendeten Sinterwerkstoff, dem Sinteraluminium, im Bereich zwischen 500 °C und 650 °C. Die Ausgangskörper 1 und 5 versintern dabei gleichmäßig über die stirnseitigen Kontakt- bzw. Fügeflächen 4 und 6 und bilden im so erhaltenen Sinterverbund 1, 5 dessen internen Fügebereich. Aufgrund des gewählten Sinterwerkstoffs genügt es, wenn die Ausgangskörper 1 und 5 beim Sintern im losen Druckkontakt, nur aufgrund des Eigengewichts eines oben aufliegenden Ausgangskörpers 1 oder 5 aneinander oder genauer gesagt aufeinander liegen.

Um die Ausgangskörper 1 und 5 für das Sintern relativ zueinander zu positionieren, kann eine Positioniereinrichtung verwendet werden. Die miteinander zu versinternden Paare jeweils aus einem Ausgangskörper 1 und einem Ausgangskörper 5 können auf einer Oberseite der Positioniereinrichtung aufliegen, wobei von der Oberseite der Positioniereinrichtung abragende Positionierelemente in die Bohrungen 7 beider Ausgangskörper 1 und 5 hinein ragen und die Ausgangskörper 1 und 5 dadurch relativ zueinander positionieren. Falls die Bohrungen 7 nicht vorhanden sein sollten oder gegebenenfalls auch zusätzlich können an den Stirnflächen 4 und 6 Positioniernasen und -vertiefungen geformt sein, die direkt zusammenwirkend die Ausgangskörper 1 und 5 relativ zueinander positionieren können. Zweckmäßigerweise weist jeder der Ausgangskörper 1 und 5 wenigstens zwei derartige Positionierelemente auf. Anstelle direkt zusammenwirkender Positionierelemente kann auch in jeder der Stirnflächen 4 und 6 jeweils wenigstens eine Positioniervertiefung gebildet sein, in die zum Positionieren ein zusätzliches Positionierelement eingreift.

Der im Sinterverbund 1,5 die Antriebsscheibe 5 bildende Ausgangskörper 5 ist geometrisch kompakter als der Ausgangskörper 1, insbesondere wegen der zwischen den Flügeln 3 vergleichsweise dünnen Hülsen- bzw. Hohlradwand 2. Der Ausgangskörper 1 weist in Radial- und auch in Umfangsrichtung eine ungleichmäßigere Massenverteilung als der Ausgangskörper 5 auf. Es ist aufgrund dieser Formunterschiede zu erwarten, dass der Ausgangskörper 1 beim gemeinsamen Sintern eine größere relative Formunteränderung als der Ausgangskörper 5 erfährt, würden die Ausgangskörper 1 und 5 wie gepresst und optional mechanisch nachbearbeitet bei der Sintertemperatur Tₛ gesintert werden. Als relative Formunteränderung oder Schwindung wird beim jeweiligen Ausgangskörper 1 und 2 der Unterschied in der Form zwischen dem nur gepressten Zustand und dem fertig gesinterten Zustand verstanden.

In einer Verfahrensvariante wird der Ausgangskörper 1 vor dem gemeinsamen Sintern bei einer Temperatur unterhalb der Sintertemperatur Tₛ vorgesintert. Die Vorsintertemperatur wird dem Sinterwerkstoff entsprechend aus dem Bereich zwischen 300° und 500° C gewählt. Durch das Vorsintern wird der Ausgangskörper 1 vorteilhafterweise auch entwachst. In der Verfahrensvariante werden wie vorstehend für die Grundvariante beschrieben die miteinander zu versinternden Paare von Ausgangskörpern 1 und 5 aneinander gelegt, jeweils ein vorgesinterter Ausgangskörper 1 und ein noch mit dem Pressgefüge vorliegender Ausgangskörper 5, gemeinsam gesintert und dadurch über die aneinander liegenden Stirnflächen 4 und 6 miteinander versintert. Der Ausgangskörper 1 kann nach dem Vorsintern einzeln kalibriert werden. In einer Modifikation kann der Ausgangskörper 5 wie vorstehend geschildert vorgesintert und optional im vorgesinterten Zustand kalibriert werden. Der vorgesinterte Ausgangskörper 1 oder 5 kann vor oder nach einer optionalen Einzelkalibrierung auch einzeln in anderer Weise bearbeitet werden, sollte eine mechanische Bearbeitung erforderlich sein.

In noch einer Verfahrensvariante kann oder können der Ausgangskörper 1 oder der Ausgangskörper 5 vor dem gemeinsamen Sintern bei Sintertemperatur Tₛ einzeln fertig gesintert werden. Der jeweilige Ausgangskörper 1 oder 5 nimmt an dem gemeinsamen Sintern also nicht mehr als nur gepresster oder optional vorgesinterter Grünling, sondern als fertiger Ausgangssinterkörper teil.

Nach dem gemeinsamen Sintern kann der Sinterverbund 1, 5, nämlich die jeweils in sich gesinterten und miteinander versinterten, aus den Ausgangskörpern 1 und 5 erhaltenen Axialabschnitte 1 und nach- oder weiterbearbeitet werden, sollte eine Nach- oder Weiterbearbeitung erforderlich sein.

Die Herstellung des Sinterverbunds 1,10 des zweiten Ausführungsbeispiels entspricht der des ersten Ausführungsbeispiels sowohl bei Ausführung der Grundvariante als auch in den Verfahrensvarianten mit vorgesinterten oder fertig gesinterten Ausgangskörpern 1 oder vorgesinterten oder fertig gesinterten Ausgangskörpern 10.

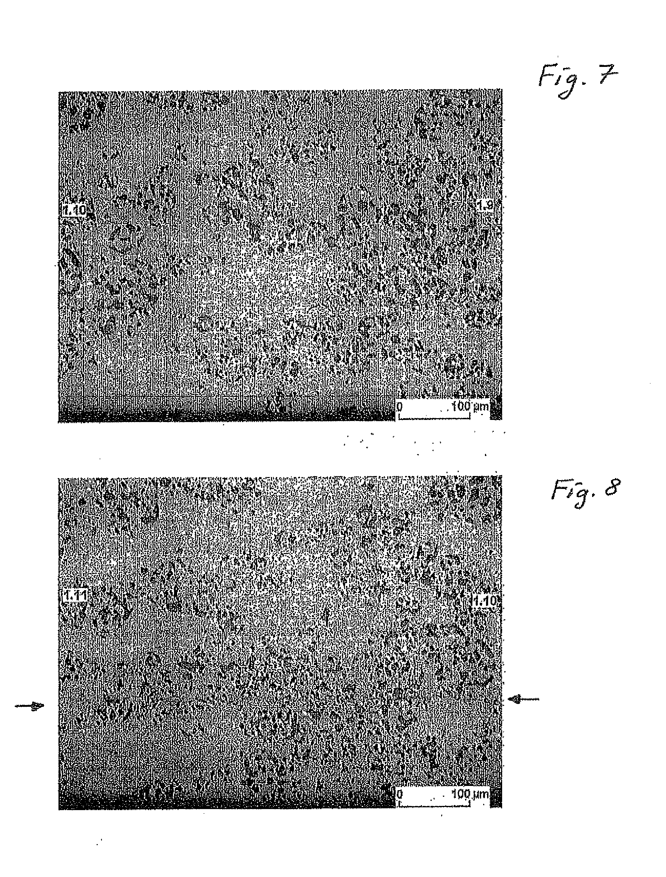

Die Figuren 7 und 8 sind Längsschliffaufnahmen, die das Mikrogefüge des Sinterverbunds des ersten Ausführungsbeispiels im Fügebereich an in radialer Richtung unterschiedlichen Stellen des Sinterverbunds zeigen. Im Aufnahmebereich der Figur 7 ist der Fügebereich in der dargestellten Vergrößerung nicht zu erkennen, der Sinterverbund weist in diesem Teilbereich über den Fügebereich hinweg überall ein gleichmäßiges Sintergefüge auf. In dem in Figur 8 gezeigten Teilbereich des Fügebereichs ist dieser stellenweise erkennbar und wird mit seitlichen Pfeilen identifiziert. Eine Versinterung fand allerdings auch in diesem Teilbereich statt, es verbleiben nur lokal Stellen einer nicht ganz vollständigen Versinterung, was jedoch hinsichtlich der Festigkeit des Sinterverbunds, auch hinsichtlich der Dauerfestigkeit, toleriert werden kann. Würden die beiden Ausgangskörper 1 und 5 nicht miteinander versintert, sondern in herkömmlicher Weise beispielsweise miteinander verschraubt werden, wäre die Verbindung auch nicht über den gesamten Fügebereich überall gleich, sondern würde Stellen höherer und niederer Festigkeit aufweisen. Für den Sinterverbund des zweiten Ausführungsbeispiels ergab sich in Versuchen ein vergleichbares Mikrogefüge.

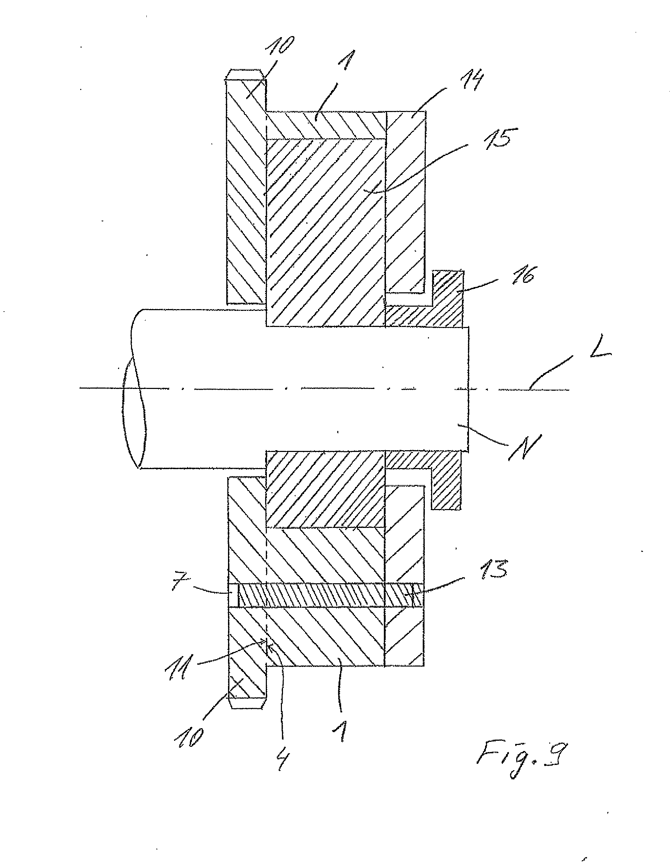

In Figur 9 ist eine Nockenwelle N einer Verbrennungskraftmaschine mit einem Schwenkflügelversteller dargestellt, der an einem axialen Ende auf der Nockenwelle N montiert ist. Die Nockenwelle N dient in bekannter Weise der Steuerung von Ventilen der Verbrennungskraftmaschine. Der Schwenkflügelversteller umfasst einen Stator, der in fester Drehwinkelbeziehung von einer Kurbelwelle der Verbrennungskraftmaschine drehangetrieben wird, und einen Rotor 15, der drehfest mit der Nockenwelle N mittels eines Befestigungselements 16 verbunden und für den gemeinsamen Drehantrieb mit dem Stator gekoppelt ist. Der Rotor 15 ist innerhalb der Kopplung relativ zum Stator um die mit der Nockenwelle N gemeinsame Längsachse L über einen begrenzten Drehwinkelbereich hin und her drehbar. Die Drehwinkelposition der Nockenwelle N kann diesem Drehwinkelbereich entsprechend relativ zur Drehwinkelposition der Kurbelwelle verstellt werden.

Der Stator umfasst den Sinterverbund 1, 10 bzw. Rotationskörper 1, 10 des zweiten Ausführungsbeispiels und einen Deckel 14, der mit dem Sinterverbund 1,10 mittels mehrerer Befestigungselemente 13 drehsteif verbunden ist. Beispielhaft handelt es sich um eine Schraubverbindung. Die Befestigungselemente 13 durchragen die Bohrungen 7 und am Deckel 14 entsprechend geformte Bohrungsfortsätze.

Der Rotor 15 weist um die Längsachse L der Nockenwelle N verteilt mit den Flügeln 3 des Sinterverbunds 3, 10 zusammenwirkende, von einem zentralen Bereich des Rotors 15 nach außen abragende Flügel auf. Der Stator 1, 10, 14 bildet ein fluiddichtes Gehäuse für den Rotor 15. Zwischen dem Stator 1, 10, 14 und dem Rotor 15 sind in bekannter Weise Druckfluidkammern gebildet, die in ebenfalls bekannter Weise angesteuert werden, um die relative Drehwinkelposition zwischen dem Stator 1, 10, 14 und dem Rotor 15 und in der Folge die Drehwinkelposition zwischen der Kurbelwelle und der Nockenwelle N in Anpassung an den Betriebszustand der Verbrennungskraftmaschine einzustellen.

Für den Sinterverbund 1, 10 sind die vor dem Zusammensintern vorhandenen Stirnflächen 4 und 11, die nun den Fügebereich des einstückigen Sinterverbunds 1,10 bilden, in strichliierter Linie angedeutet. Der Sinterverbund 1,10 bildet mit seiner Antriebsscheibe 10 wie erwähnt einen der beiden Gehäusedeckel des Stators 1, 10, 14, wodurch die Anzahl der zum Stator miteinander zu verbindenden Teile reduziert werden kann.

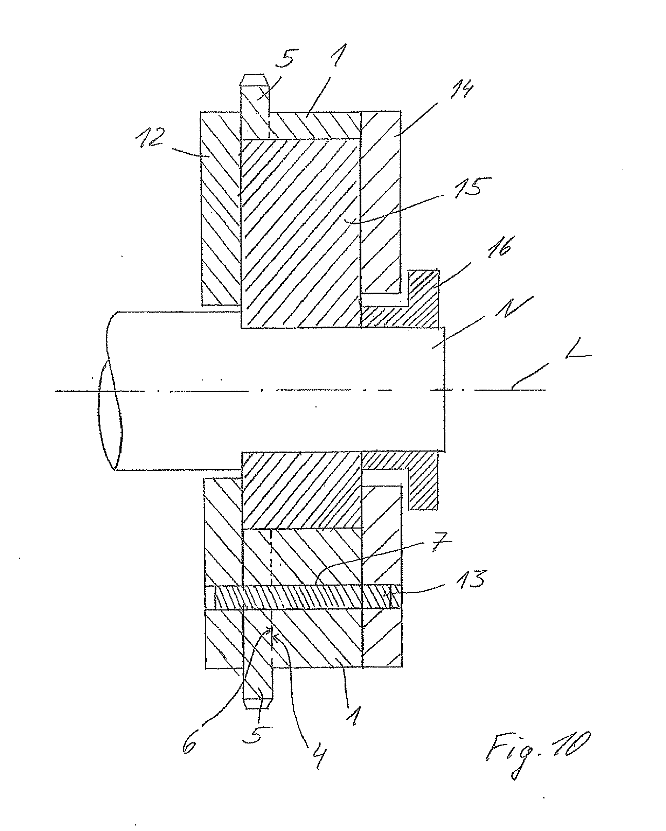

Figur 10 zeigt eine Nockenwelle N mit einem Schwenkflügelversteller, dessen Stator mit dem Sinterverbund 1, 5 des ersten Ausführungsbeispiels gebildet ist. Der Sinterverbund 1,5 bildet aufgrund der Form der Antriebsscheibe 5 lediglich ein den Rotor 15 am äußeren Umfang umgebendes Mittelteil des Verstellergehäuses. Zur Vervollständigung des vom Stator gebildeten Gehäuses ist daher ein zusätzlicher Deckel 12 erforderlich, der dem Deckel 14 axial gegenüberliegend auf der anderen Seite des Rotors 15 angeordnet ist. Die beiden Deckel 12 und 14 sind über den axial dazwischen angeordneten Sinterverbund 1, 5 miteinander drehfest und fluiddicht verbunden, wie im Ausführungsbeispiel der Figur 9 mittels Befestigungselementen 13, beispielhaft Schraubelementen, die die Bohrungen 7 des Sinterverbunds 1, 5 durchragen und jeweils in Bohrungsfortsätze der Deckel 12 und 14 hineinragen, um die beiden Deckel 12 und 14 axial gegen den Sinterverbund 1,5 zu spannen. Auch für den Sinterverbund 1, 5 ist dessen interner Fügebereich durch eine strichliierte Linie für die früheren Stirnflächen 4 und 6 angedeutet. Tatsächlich ist der Sinterverbund 1,5 jedoch wie beschrieben einstückig.

Die nachfolgende Tabelle enthält Aluminiumlegierungen, mit denen erfolgreich Versuche durchgeführt wurden. Die Legierungen sind beispielhaft, nur stellvertretend für andere zu verstehen. Angegeben sind nur die Legierungspartner des Aluminiums. Aluminium macht jeweils den Rest der Legierungen aus. Die Legierungen 1 bis 3 enthalten jeweils Silizium, nicht zuletzt auch wegen der Erhöhung der Sinteraktivität zum Versintern, während Legierung 4 stattdessen Zink enthält. Zink und Silizium können auch gemeinsam Bestandteile verwendbarer Werkstoffe auf Aluminiumbasis sein.

| | **Legierung 1 [Massen %]** | **Legierung 2 [Massen %]** | **Legierung 3 [Massen %]** | **Legierung 4 [Massen %]** |
|---|---|---|---|---|
| **Si** | 9.0 - 12.0 | 14.0 - 16.0 | 0.5 - 0.8 | - |
| **Cu** | 1.5 - 2.0 | 2.4 - 2.8 | 4.3 - 4.7 | 1.5 - 2.0 |
| **Mg** | 0.3 - 0.6 | 0.6 - 0.8 | 0.4 - 0.6 | 2.2 - 2.8 |
| **Zn** | - | - | - | 6.0 - 7.0 |
| **Sn** | - | - | - | 0.1 - 0.3 |

In der nachfolgenden Matrix sind miteinander zum Sinterverbund versinterbare Kombinationen von Ausgangskörpern, beispielsweise Ausgangskörper 1 und 5 oder Ausgangskörper 1 und 10, zusammengestellt. Bevorzugte Kombinationen sind durch Kreuze hervorgehoben. Die nicht mit einem Kreuz versehenen Kombinationen sind jedoch ebenfalls Gegenstand der Erfindung. Wie der Matrix entnommen werden kann, können in erfindungsgemäßer Weise nicht nur Grünlinge im nur gepressten oder vorgesinterten Zustand miteinander versintert werden, sondern beispielsweise auch ein nur gepresster, gegebenenfalls einzeln bearbeiteter Grünling und ein fertig gesinterter Ausgangskörper, gegebenenfalls mechanisch bearbeiteter Ausgangskörper, oder auch ein nur gepresster oder vorgesinterter Grünling mit einem nicht pulvermetallurgisch hergestellten Ausgangskörper aus einem Aluminiumwerkstoff. Solch ein nicht pulvermetallurgisch hergestelltes Aluteil kann beispielsweise ein Blechteil oder Gussteil aus einem Aluminiumwerkstoff sein. So hat es sich in Versuchen erwiesen, dass ein nur gepresster, ein vorgesinterter oder auch ein fertig gesinterter Ausgangskörper und ein Blechteil, jeweils aus einem Aluminiumwerkstoff, in ausreichender Güte miteinander versintert werden können. Beim Versintern nur gepresster und auch vorgesinterter Grünlinge sowie fertig gesinterter Ausgangskörper jeweils mit einem Gussteil aus einem Aluminiumwerkstoff ergaben sich Sinterverbunde ebenfalls mit ausreichender Festigkeit. Soweit zum jeweiligen Ausgangskörper "bearbeitet" angegeben wird, kann es sich um eine mechanische Bearbeitung, beispielsweise ein Bohren, Fräsen oder eine andere spanende Bearbeitung oder Trennbearbeitung, um ein Nachpressen, ein Kalibrieren oder eine Wärmebehandlung handeln, ebenso um eine Kombination von zwei oder mehr dieser Bearbeitungsverfahren. Eine Kalibrierung wird vorzugsweise nur an vorgesinterten oder fertig gesinterten Ausgangskörpern vorgenommen.

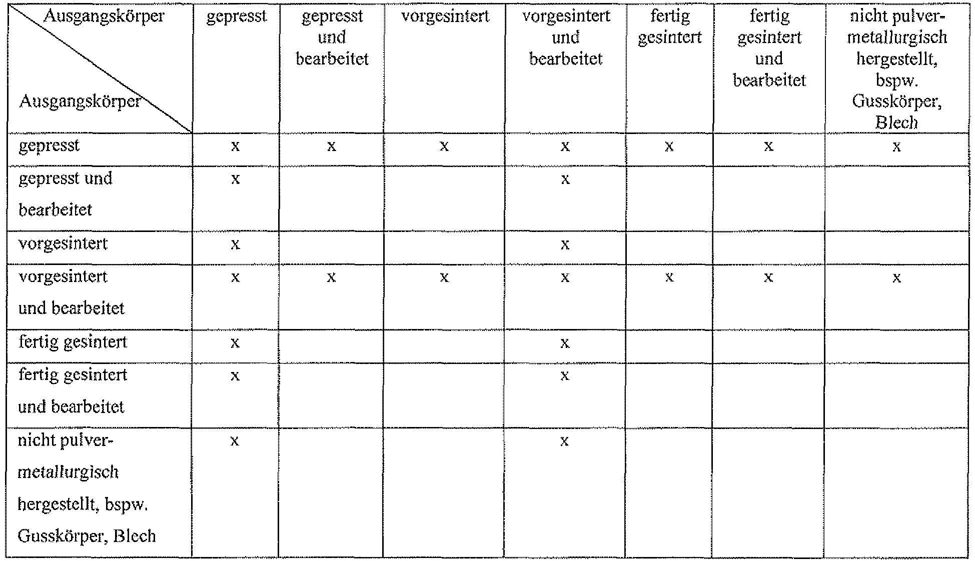

## Patentansprüche

1. Verfahren zur pulvermetallurgischen Herstellung eines Rotationskörpers, bei dem:
a) ein erster Ausgangskörper (1) aus Metallpulver gepresst,
b) ein zweiter Ausgangskörper (5; 10) separat von dem ersten Ausgangskörper (1) aus Metall geformt,
c) die Ausgangskörper (1, 5; 1, 10) mit Stirnflächen (4, 6; 4, 11) in Bezug auf eine Längsachse (L) des Rotationskörpers in axialem Kontakt aneinander gelegt
d) und durch gemeinsames Sintern dauerhaft fest miteinander versintert werden,
e) wobei der erste Ausgangskörper (1) aus einem Pulver auf Aluminiumbasis gepresst und der zweite Ausgangskörper (5; 10) aus einem Aluminiumwerkstoff geformt
f) und die Ausgangskörper (1, 5; 1, 10) an den Stirnflächen (4, 6; 4, 11) miteinander versintert werden,
g) wobei einer der Ausgangskörper (1, 5; 1, 10) für das gemeinsame Sintern auf den anderen gelegt wird und bei dem Sintern nur mit seinem eigenen Gewicht, gegen den anderen der Ausgangskörper (1, 5; 1, 10) drückt.

2. Verfahren nach dem vorhergehenden Anspruch, bei dem der zweite Ausgangskörper (5; 10) ebenfalls pulvermetallurgisch geformt, nämlich aus einem Pulver aus Aluminiumbasis gepresst wird, oder durch Gießen einer Aluminiumbasisschmelze unmittelbar als Gussstück oder durch eine nach dem Gießen durchgeführte thermische oder mechanische Behandlung oder eine Bearbeitung erhalten wird, wobei der Aluminiumwerkstoff des ersten Ausgangskörpers (1) und der Aluminiumwerkstoff des zweiten Ausgangskörpers (5; 10) zum Versintern einander angepasst gewählt, vorzugsweise zumindest im Wesentlichen gleich sind.

3. Verfahren nach einem der vorhergehenden Ansprüche, bei dem der erste Ausgangskörper (1) als Hülsenstruktur mit einer um die Längsachse (L) erstreckten Hülsenwand (2), die im Vergleich zu einem Außenradius der Hülsenwand (2) dünn ist, gepresst wird und der zweite Ausgangskörper (5; 10) als Scheibenstruktur gepresst oder unter Einschluss eines Gießverfahrens geformt wird, oder bei dem der erste Ausgangskörper (1) als die Scheibenstruktur gepresst und der zweite Ausgangskörper als die Hülsenstruktur gepresst oder unter Einschluss eines Gießverfahrens geformt wird.

4. Verfahren nach Anspruch, 3 bei dem der erste Ausgangskörper (1) mit wenigstens einem von der Hülsenwand (2) der Hülsenstruktur oder einem Ring der Scheibenstruktur nach innen oder außen vorragenden Flügel (3) gepresst wird.

5. Verfahren nach einem der vorhergehenden Ansprüche, bei dem zur Herstellung eines Flügelrads mit axial angesetzter Antriebsscheibe der erste Ausgangskörper (1) als das Flügelrad mit wenigstens einem nach innen oder außen vorragenden Flügel (3) gepresst und der zweite Ausgangskörper (5; 10) als die Antriebsscheibe gepresst oder unter Einschluss eines Gießverfahrens geformt wird, oder bei dem der erste Ausgangskörper als die Antriebsscheibe gepresst und der zweite Ausgangskörper als das Flügelrad gepresst oder unter Einschluss eines Gießverfahrens geformt wird.

6. Verfahren nach einem der vorhergehenden Ansprüche, bei dem
- die Ausgangskörper (1, 5) nur an den Stirnflächen (4, 6; 4, 11) miteinander versintert werden, oder/und
- die Stirnflächen (4, 6; 4, 11) plan sind.

7. Verfahren nach einem der vorhergehenden Ansprüche, bei dem wenigstens einer der Ausgangskörper (1, 5; 1, 10) vor dem gemeinsamen Sintern unterhalb einer für das Versintern erforderlichen Sintertemperatur (T_{S}) vorgesintert und bei dem Vorsintern vorzugsweise entwachst wird, wobei bei dem Verfahren zum Beispiel nur ein einziger der Ausgangskörper (1,5; 1, 10) vorgesintert wird.

8. Verfahren nach einem der vorhergehenden Ansprüche, bei dem eine nach dem Pressen vorhandene Presshaut von wenigstens einem der Ausgangskörper (1, 5; 1, 10) vor dem Aneinanderlegen entfernt wird.

9. Verfahren nach einem der vorhergehenden Ansprüche, bei dem wenigstens einer der Ausgangskörper (1, 5; 1, 10), vorzugsweise sowohl der erste Ausgangskörper (1) als auch der zweite Ausgangskörper (5; 10), vor dem gemeinsamen Sintern kalibriert wird.

10. Verfahren nach einem der vorhergehenden Ansprüche, bei dem die Ausgangskörper (1, 5; 1, 10) jeweils mit wenigstens einem Positionierelement (7) geformt und bei dem Aneinanderlegen relativ zueinander mittels der dabei zusammenwirkenden Positionierelemente (7) relativ zueinander positioniert werden, wobei das wenigstens eine Positionierelement (7) des ersten Ausgangskörpers (1) und das wenigstens eine Positionierelement (7) des zweiten Ausgangskörpers (5; 10) bei dem Positionieren direkt miteinander oder mit einem Positionierelement einer externen Positioniereinrichtung oder einem eingesetzten, für den Verbund internen Positionierelement in einen die Ausgangskörper (1, 5; 1, 10) relativ zueinander positionierenden Eingriff gebracht werden.

11. Verfahren nach einem der vorhergehenden Ansprüche, bei dem die Ausgangskörper (1, 5; 1, 10) mit jeweils wenigstens einer axialen Bohrung (7) geformt und für das gemeinsame Sintern so aneinander gelegt werden, dass die wenigstens eine Bohrung (7) des ersten Ausgangskörpers (1) und die wenigstens eine Bohrung (7) des zweiten Ausgangskörpers (5; 10) axial fluchtend ineinander münden, wobei die Bohrungen (7) bei dem Aneinanderlegen der Ausgangskörper (1, 5; 1, 10) vorzugsweise als Positionierelemente zum positionsgenauen Aneinanderlegen verwendet werden, indem die Bohrungen (7) beim Aneinanderlegen durch Einführen eines axial erstreckten Positionierelements zur exakten axialen Flucht gebracht oder in exakt axialer Flucht gehalten werden.

12. Sinterverbund, hergestellt mittels eines Verfahrens nach einem der vorhergehenden Ansprüche, der Sinterverbund umfassend:
a) ein Hohlrad (1) mit einer zentralen Längsachse (L) und wenigstens einem in eine Richtung quer zur Längsachse (L) vorragenden Flügel (3)
b) und eine an das Hohlrad (1) axial angesetzte und mit dem Hohlrad (1) drehsteif verbundene Antriebsscheibe (5; 10),
c) wobei das Hohlrad (1) und die Antriebsscheibe (5; 10) jeweils aus einem Aluminiumbasiswerkstoff separat geformt,
d) an einander axial zugewandten Stirnflächen (4, 6; 4, 11) miteinander versintert und dadurch drehsteif verbunden sind
e) und wenigstens eines aus Hohlrad (1) und Antriebsscheibe (5; 10) aus einem Pulver auf Aluminiumbasis gepresst ist.

13. Sinterverbund nach dem vorhergehenden Anspruch, bei dem das Hohlrad (1) oder die Antriebsscheibe (5; 10) über seine oder ihre axiale Länge zumindest im Wesentlichen überall den gleichen Querschnitt aufweist oder aufweisen.

14. Sinterverbund nach einem der vorhergehenden Ansprüche, **dadurch gekennzeichnet, dass** der Sinterverbund (1, 10) topfförmig ist und das Hohlrad (1) eine um die Längsachse (L) erstreckte Topfwand (2) und die Antriebsscheibe (10) einen Topfboden bildet.

15. Stator für einen Schwenkflügelversteller zum Verstellen der Drehwinkellage einer Ventilsteuerwelle (N) relativ zu einer Kurbelwelle einer Verbrennungskraftmaschine, wobei der Schwenkflügelversteller einen für einen Drehantrieb mit der Kurbelwelle koppelbaren Stator (1, 5, 12, 14; 1, 10, 14) und einen vom Stator antreibbaren und mit der Ventilsteuerwelle (N) koppelbaren Rotor (15) und der Stator einen Sinterverbund (1, 5; 1, 10) nach einem der Ansprüche 12 bis 14 umfasst.

## Claims

1. A method for powder-metallurgically manufacturing a rotational body, wherein:
a) a first starting body (1) is compacted from metal powder;
b) a second starting body (5; 10) is formed from metal, separately from the first starting body (1);
c) the starting bodies (1, 5; 1, 10) are placed against each other in axial contact via end faces (4, 6; 4, 11) in relation to a longitudinal axis (L) of the rotational body
d) and permanently and firmly sintered to each other by collective sintering,
e) wherein the first starting body (1) is compacted from an aluminium-based powder and the second starting body (5; 10) is formed from an aluminium material
f) and the starting bodies (1,5; 1, 10) are sintered to each other at the end faces (4, 6; 4, 11),
g) wherein one of the starting bodies (1, 5; 1, 10) is placed onto the other for collective sintering and presses against the other of the starting bodies (1, 5; 1, 10), with its own weight only, during sintering.

2. The method according to the preceding claim, wherein the second starting body (5; 10) is likewise powder-metallurgically formed, i.e. compacted from an aluminium-based powder, or is obtained directly as a cast body by casting an aluminium-based molten mass or by a thermal or mechanical treatment performed after casting or by machining, wherein the aluminium material of the first starting body (1) and the aluminium material of the second starting body (5; 10) are chosen in accordance with each other for being fused by sintering and are preferably at least substantially the same.

3. The method according to any one of the preceding claims, wherein the first starting body (1) is compacted as a sleeve structure comprising a sleeve wall (2) which extends around the longitudinal axis (L) and is thin as compared to an outer radius of the sleeve wall (2), and the second starting body (5; 10) is compacted as a disc structure or is formed by incorporating a casting process, or wherein the first starting body (1) is compacted as the disc structure and the second starting body is compacted, or formed by incorporating a casting process, as the sleeve structure.

4. The method according to Claim 3, wherein the first starting body (1) is compacted with at least one wing (3) which protrudes inwards or outwards from the sleeve wall (2) of the sleeve structure or a ring of the disc structure.

5. The method according to any one of the preceding claims, wherein in order to manufacture a vane with a drive disc axially placed on it, the first starting body (1) is compacted as the vane with at least one wing (3) which protrudes inwards or outwards, and the second starting body (5; 10) is compacted, or formed by incorporating a casting process, as the drive disc, or wherein the first starting body is compacted as the drive disc and the second starting body is compacted, or formed by incorporating a casting process, as the vane.

6. The method according to any one of the preceding claims, wherein:
- the starting bodies (1, 5) are only sintered to each other at their end faces (4, 6; 4, 11);
and/or
- the end faces (4, 6; 4, 11) are planar.

7. The method according to any one of the preceding claims, wherein at least one of the starting bodies (1, 5; 1, 10) is pre-sintered, below a sintering temperature (T_{S}) necessary for sintering, before collective sintering and is preferably dewaxed during pre-sintering, wherein only one of the starting bodies (1, 5; 1, 10) is for example pre-sintered in the method.

8. The method according to any one of the preceding claims, wherein a pressing skin present after compacting is removed from at least one of the starting bodies (1,5; 1, 10) before they are placed against each other.

9. The method according to any one of the preceding claims, wherein at least one of the starting bodies (1, 5; 1, 10) and preferably both the first starting body (1) and the second starting body (5; 10) is calibrated before collective sintering.

10. The method according to any one of the preceding claims, wherein the starting bodies (1, 5; 1, 10) are each formed with at least one positioning element (7) and are positioned relative to each other when placed against each other by means of the co-operating positioning elements (7), wherein during positioning, the at least one positioning element (7) of the first starting body (1) and the at least one positioning element (7) of the second starting body (5; 10) are moved into an engagement, which positions the starting bodies (1, 5; 1, 10) relative to each other, with each other directly or with a positioning element of an external positioning device or an inserted positioning element which is internal to the sintered composite.

11. The method according to any one of the preceding claims, wherein the starting bodies (1, 5; 1, 10) are each formed with at least one axial bore (7) and placed against each other for collective sintering such that the at least one bore (7) of the first starting body (1) and the at least one bore (7) of the second starting body (5; 10) are axially aligned and feed into each other, wherein when the starting bodies (1, 5; 1, 10) are placed against each other, the bores (7) are preferably used as positioning elements for placing them against each other in an exact position, by moving the bores (7) into exact axial alignment or holding them in exact axial alignment when the starting bodies (1, 5; 1, 10) are placed against each other, by inserting a positioning element which extends axially.

12. A sintered composite, manufactured by means of a method according to any one of the preceding claims, said sintered composite comprising:
a) a hollow wheel (1) comprising a central longitudinal axis (L) and at least one wing (3) which protrudes in a direction transverse to the longitudinal axis (L);
b) and a drive disc (5; 10) which is placed axially onto the hollow wheel (1) and non-rotationally connected to the hollow wheel (1),
c) wherein the hollow wheel (1) and the drive disc (5; 10) are formed separately, each from an aluminium-based material,
d) sintered and thus non-rotationally connected to each other at end faces (4, 6; 4, 11) which face each other axially,
e) and at least one of the hollow wheel (1) and the drive disc (5; 10) is compacted from an aluminium-based powder.

13. The sintered composite according to the preceding claim, wherein the hollow wheel (1) and/or the drive disc (5; 10) respectively exhibit the same cross-section over their axial length at least substantially throughout.

14. The sintered composite according to any one of the preceding claims, **characterised in that** the sintered composite (1, 10) is cup-shaped, and the hollow wheel (1) forms a cup wall (2) which extends around the longitudinal axis (L), and the drive disc (10) forms a cup base.

15. A stator for a swing-wing adjuster for adjusting the rotational angular position of a valve control shaft (N) relative to a crankshaft of an internal combustion engine, wherein the swing-wing adjuster comprises a stator (1, 5, 12, 14; 1, 10, 14) which can be coupled to the crankshaft in order to be rotary-driven, and a rotor (15) which can be driven by the stator and can be coupled to the valve control shaft (N), wherein the stator comprises a sintered composite (1, 5; 1, 10) according to any one of Claims 12 to 14.

## Revendications

1. Procédé de fabrication par métallurgie des poudres d'un corps de rotation dans lequel :
a) un premier corps de départ (1) en poudre métallique est pressé,
b) un deuxième corps de départ (5 ; 10) est formé en métal séparément du premier corps de départ (1),
c) les corps de départ (1, 5 ; 1, 10) avec des faces frontales (4, 6 ; 4, 11) sont mis en contact axial entre eux par rapport à un axe longitudinal (L) du corps de rotation
d) et frittés fermement entre eux par frittage commun,
e) dans lequel le premier corps de départ (1) est pressé à partir d'une poudre à base d'aluminium et le deuxième corps de départ (5 ; 10) étant formé à partir d'un matériau à base d'aluminium
f) et les corps de départ (1, 5 ; 1, 10) sont frittés entre eux au niveau des faces frontales (4, 6 ; 4, 11),
g) dans lequel un des corps de départ (1, 5 ; 1, 10) est posé sur les autres pour le frittage commun et, lors du frittage, s'appuie uniquement avec son propre poids, contre l'autre corps de départ (1, 5 ; 1, 10).

2. Procédé selon la revendication précédente, dans lequel le deuxième corps de départ (5 ; 10) est également formé par métallurgie des poudres, à savoir pressé à partir d'une poudre à base d'aluminium ou obtenu par moulage d'une fonte à base d'aluminium directement sous la forme d'une pièce moulée ou par un traitement thermique ou mécanique effectué après le moulage ou un usinage, dans lequel le matériau à base d'aluminium du premier corps de départ (1) et le matériau à base d'aluminium du deuxième corps de départ (5 ; 10) sont adaptés à un frittage l'un avec l'autre, de préférence au moins globalement identiques.

3. Procédé selon l'une des revendications précédentes, dans lequel le premier corps de départ (1) est pressé sous la forme d'une structure en forme de manchon avec une paroi de manchon (2) s'étendant autour de l'axe longitudinal (L), qui est mince par rapport à un rayon externe de la paroi de manchon (2) et le deuxième corps de départ (5 ; 10) est pressé sous la forme d'une structure en forme de disque ou moulé par l'intégration d'un procédé de moulage ou dans lequel le premier corps de départ (1) est pressé sous la forme de la structure en forme de disque et le deuxième corps de départ est pressé sous la forme de la structure de manchon et moulé par l'intégration d'un procédé de moulage.

4. Procédé selon la revendication 3, dans lequel le premier corps de départ (1) est pressé avec au moins une aube (3) dépassant vers l'intérieur ou l'extérieur de la paroi de manchon (2) de la structure en forme de manchon ou d'un anneau de la structure en forme de disque.

5. Procédé selon l'une des revendications précédentes, dans lequel, pour la fabrication d'une roue à aubes avec un disque d'entraînement axial, le premier corps de départ (1) est pressé sous la forme de la roue à aubes avec au moins une aube (3) dépassant vers l'intérieur ou vers l'extérieur et le deuxième corps de départ (5 ; 10) est pressé sous la forme du disque d'entraînement ou moulé par l'intégration d'un procédé de moulage ou dans lequel le premier corps de départ est pressé sous la forme du disque d'entraînement et le deuxième corps de départ est pressé sous la forme de la roue à aubes ou moulé par l'intégration d'un procédé de moulage.

6. Procédé selon l'une des revendications précédentes, dans lequel
- les corps de départ (1, 5) sont frittés entre eux uniquement au niveau des faces frontales (4, 6 ; 4, 11) et/ou
- les faces frontales (4, 6 ; 4, 11) sont planes.

7. Procédé selon l'une des revendications précédentes, dans lequel au moins un des corps de départ (1, 5 ; 1, 10) est pré-fritté, avant le frittage commun, en dessous d'une température de frittage (T_{S}) nécessaire pour le frittage et, lors du pré-frittage, de préférence déciré, dans lequel lors du procédé par exemple un seul des corps de départ (1, 5 ; 1, 10) est pré-fritté.

8. Procédé selon l'une des revendications précédentes, dans lequel une peau de pressage existant après le pressage est éliminée d'au moins un des corps de départ (1, 5 ; 1, 10) avant l'assemblage.

9. Procédé selon l'une des revendications précédentes, dans lequel au moins un des corps de départ (1, 5 ; 1, 10), de préférence aussi bien le premier corps de départ (1) que le deuxième corps de départ (5 ; 10) est calibré avant le frittage commun.

10. Procédé selon l'une des revendications précédentes, dans lequel les corps de départ (1, 5 ; 1, 10) sont moulés avec chacun au moins un élément de positionnement (7) et, lors de l'assemblage, sont positionnés l'un par rapport à l'autre à l'aide d'éléments de positionnement (7) en interaction, et, lors du positionnement, dans lequel l'au moins un élément de positionnement (7) du premier corps de départ (1) et l'au moins un élément de positionnement (7) du deuxième corps de départ (5 ; 10) sont emboîtés directement entre eux ou emboîtés avec un élément de positionnement d'un dispositif de positionnement externe ou avec un élément de positionnement interne inséré pour la liaison dans un des corps de départ (1, 5 ; 1, 10).

11. Procédé selon l'une des revendications précédentes, dans lequel les corps de départ (1, 5 ; 1, 10) sont moulés chacun avec au moins un alésage axial (7) et placés l'un par rapport à l'autre pour le frittage commun de façon à ce que l'au moins un alésage (7) du premier corps de départ (1) et l'au moins un alésage (7) du deuxième corps de départ (5 ; 10) débouchent l'un dans l'autre avec un alignement axial, dans lequel les alésages (7) sont utilisés, lors de l'assemblage des corps de départ (1, 5 ; 1, 10), de préférence comme des éléments de positionnement pour un assemblage avec positionnement précis, grâce au fait que les alésages (7) sont mis en alignement axial exact ou maintenus en alignement axial exact par l'insertion d'un élément de positionnement à extension axiale.

12. Composite fritté fabriqué à l'aide d'un procédé selon l'une des revendications précédentes, le composite fritté comprenant :
a) une couronne (1) avec un axe longitudinal central (L) et au moins une aube (3) dépassant dans une direction transversale par rapport à l'axe longitudinal (L)
b) et un disque d'entraînement (5 ; 10) posé axialement sur la couronne (1) et relié de manière solidaire en rotation avec la couronne (1),
c) dans lequel la couronne (1) et le disque d'entraînement (5 ; 10) sont formés séparément à partir d'un matériau à base d'aluminium,
d) frittés ensemble au niveau de faces frontales (4, 6 ; 4, 11) orientées axialement l'une vers l'autre et donc reliés entre eux de manière solidaire en rotation e) et au moins la couronne (1) ou le disque d'entraînement (5 ; 10) est pressé à partir d'une poudre à base d'aluminium.

13. Composite fritté selon la revendication précédente, dans lequel la couronne (1) ou le disque d'entraînement (5 ; 10) comprend (ou comprennent), sur son (leur) longueur axiale, au moins quasiment partout la même section transversale.

14. Composite fritté selon l'une des revendications précédentes, **caractérisé en ce que** le composite fritté (1, 10) présente une forme de cloche et la couronne (1) forme une paroi de cloche (2) qui s'étend autour de l'axe longitudinal (L) et le disque d'entraînement (10) forme un fond de cloche.

15. Stator pour un dispositif de réglage d'aube pivotante pour le réglage de la position angulaire rotative d'un arbre de commande de soupape (N) par rapport à un vilebrequin d'une machine à combustion interne, dans lequel le dispositif de réglage d'aube pivotante comprenant un stator (1, 5, 12, 14 ; 1, 10, 14) pouvant être couplé avec le vilebrequin pour un entraînement rotatif et un rotor (15) pouvant être entraîné par le stator et pouvant être couplé avec l'arbre de commande de soupape (N) et le stator comprenant un composite fritté (1, 5 ; 1, 10) selon l'une des revendications 12 à 14.
